# EUROPEAN PATENT SPECIFICATION

(11) **EP 3 343 907 B1**
(45) Date of publication and mention of the grant of the patent: **27.11.2019**
(21) Application number: 16893251.5
(22) Date of filing: 12.09.2016
(51) Int. Cl.: H04N 5/64, H04N 5/63, H04N 21/443

(54) **TELEVISION MAINBOARD DEVICE, CONNECTION DEVICE, TELEVISION, AND TELEVISION SYSTEM**
TV-HAUPTPLATINE, ANSCHLUSSVORRICHTUNG, TV UND TV-SYSTEM
DISPOSITIF DE CARTE MÈRE DE TÉLÉVISEUR, DISPOSITIF DE CONNEXION, TÉLÉVISEUR ET SYSTÈME DE TÉLÉVISEUR

(30) Priority: 07.03.2016 CN 201610127714
(43) Date of publication of application: 04.07.2018
(73) Proprietor: Heyi Intelligent Technology (Shenzhen) Co., Ltd., Beijing 100029 (CN)
(72) Inventor: REN, Tingming, Beijing 100029 (CN); SU, Wenhua, Beijing 100029 (CN); AN, Shenhua, Beijing 100029 (CN); YAO, Jian, Beijing 100029 (CN); PAN, Baiyu, Beijing 100029 (CN); WANG, Ji, Beijing 100029 (CN)
(74) Representative: Weickmann & Weickmann PartmbB
(86) International application number: PCT/CN2016/098653
(87) International publication number: WO 2017/152606

(56) References cited:
- EP-A1- 2 613 250
- CN-A- 101 068 319
- CN-A- 102 883 199
- CN-A- 103 888 698
- CN-A- 104 767 949
- CN-A- 105 681 706
- CN-A- 105 721 805
- JP-B2- 3 259 219
- US-A1- 2004 165 119
- US-A1- 2008 239 229
- US-A1- 2011 069 055
- US-A1- 2011 317 076

## Description

### TECHNICAL FIELD

The present disclosure relates to the field of audio-visual equipment, and in particular, to a television (TV) main board apparatus, a connection apparatus, a TV, and a TV system.

### BACKGROUND

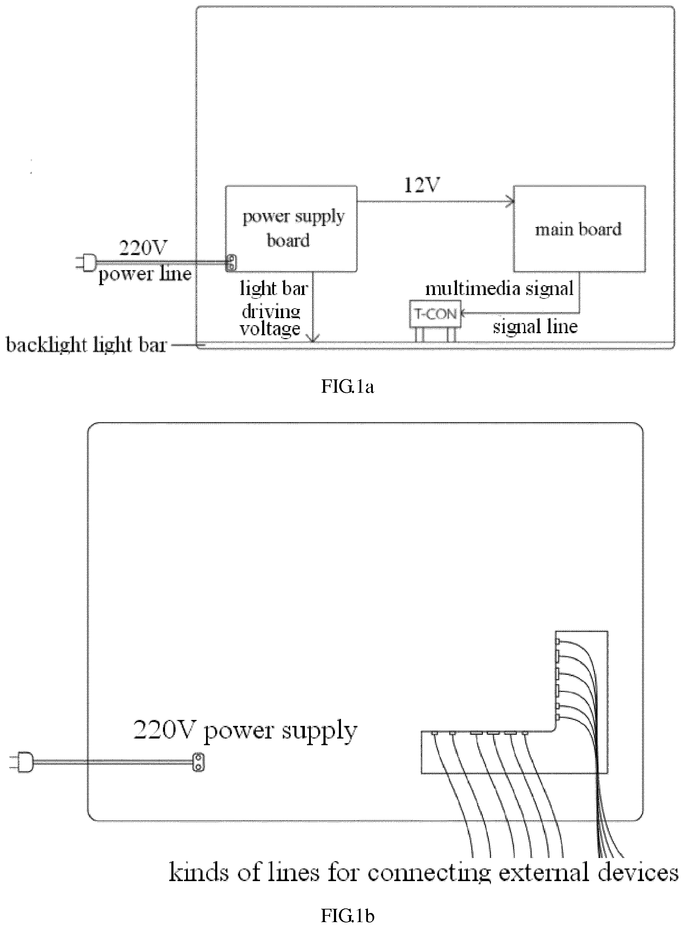

In some TV systems, the main board is integrated in the TV's rear casing. Fig. 1a is a schematic diagram illustrating the connection between a TV main board and the other related components in the TV in some TV systems. In Fig. 1a, the TV main board is integrated in the TV's rear casing. 220V power supply is input into the power supply board inside the TV via the power line. The power supply board converts a part of the power supply into DC power of 12V-which supplies power to the TV main board, and converts the other part into a light bar driving voltage for providing to the backlight light bar so as to lighten the screen. The TV main board outputs the processed multimedia signals to the subsequent components such as the timing controller (T-CON), which controls display on the screen.

Fig. 1b is a rear view of a TV where a TV main board is integrated.

As is evident from the above, in some TV systems, the TV main board is integrated in the TV's rear casing. Since there are many external ports on the main board, the TV's rear casing has to allow many leading-out wires that connect to external devices (see Fig. 1b for instance), which negatively influences the appearance, and makes it hard to place and install the external devices in a convenient way. In addition, a TV main board of this kind cannot be detached and replaced with ease, so an entire TV may have to be replaced once its main board is destroyed or needs to be upgraded.

One approach to solving the above problem includes placing the TV main board outside the TV casing as an independent apparatus. But the approach makes it necessary to provide both the TV and the main board with a respective power supply line and provide a line to connect the TV to the main board. The complicated wiring leads to further inconvenient use and installation, and the appearance is not concise and beautiful either.

US2008/239229A1 discloses a liquid crystal display comprising a circuit board including a first connector which receives a data signal and a second connector which is separated from the first connector and receives a power supply voltage, a timing controller mounted on the circuit board, the timing controller receiving the power supply voltage from the second connector and the data signal from the first connector, and processing the data signal received from the first connector, and a liquid crystal panel displaying an image using the data signal processed by the timing controller.

US2004/165119A1 discloses a TV receiving module and a display apparatus and a TV receiving system using the same, wherein the TV receiving module is small in size and is detachably mounted outside or inside of the display apparatus. The TV receiving module is adapted to select and receive a TV signal of a desired broadcast from among TV signal inputted from a TV broadcast receiving antenna or cable, and provide the received TV signal. A detachable connector unit includes a first connector installed in the TV receiving module for receiving external power and an external control signal and providing the TV signal received by the TV receiving module externally, and a second connector detachably coupled with the first connector. The display apparatus is connected to the TV receiving module via the second connector of the detachable connector unit to provide the external power and external control signal to the TV receiving module, receive the TV signal from the TV receiving module and output video and audio signals of the received TV signal. The display apparatus may be an LCD monitor or a PDP TV receiver.

US2011/069055A1 discloses a display apparatus having a slim display body to display pictures. Main components, such as a switching mode power supply and a main board, are disposed in a base unit, and a drive board mounted to a display module is connected to the switching mode power supply and the main board such that power is supplied to the display module and the main board transmits and receives a control signal, The base unit serves as a stand to support the display body below the display body. Also, the base unit is fixed to the rear of the connection unit to mount the display apparatus to a wall. A connection unit to connect the display body and the base unit is provided to change the position of the base unit. The connection unit is hingedly rotatable with respect to the display body and the base unit.

US2011/317076A1 discloses an extension module connected between a TV set and signal sources so that the signal sources communicate media signals with the TV set, wherein the extension module comprises a first interface and a second interface, the first interface is electrically connected and communicates with the TV set, and the second interface is electrically connected with the signal sources and outputs a power supply signal and a control signal to the signal sources.

### SUMMARY

In order to address at least some of the above problems, the present disclosure provides a TV main board apparatus, a connection apparatus, a TV, and a TV system, which can be used and installed with more ease.

According to a first aspect of the present disclosure, there is provided a TV main board apparatus, comprising: a casing having at least one opening; and a TV main board accommodated in the casing and having a first interface and a second interface that are exposed outside the casing via their respective openings, wherein, the first interface is capable of connecting to a power supply so as to receive first electric power, and the second interface is capable of connecting to a TV so as to transmit a multimedia signal and the first electric power to the TV and receive second electric power from the TV.

In a first embodiment of the first aspect, the second electric power is converted from the first electric power by the TV and adapted for powering the TV main board apparatus.

In a second embodiment of the first aspect, a terminal configured to transmit the first electric power, a terminal configured to transmit the second electric power, and a terminal configured to transmit the multimedia signal are integrated in the second interface.

In a third embodiment of the first aspect, the second interface comprises a high definition multimedia interface (HDMI), and a part of pins of the HDMI are configured to transmit a high definition multimedia signal and another part of the pins are configured to transmit the second electric power.

In a fourth embodiment of the first aspect, which is a further embodiment of the third embodiment, the HDMI may have more than 19 pins.

In a fifth embodiment of the first aspect, the second interface may have a live wire terminal and a neutral wire terminal that are configured to transmit the first electric power.

According to a second aspect of the present disclosure, there is provided a connection apparatus, comprising: a connection line capable of transmitting a multimedia signal and first electric power that are supplied by a TV main board apparatus to a TV and transmitting second electric power that is supplied by the TV to the TV main board apparatus; a first connection section located at one end of the connection line and capable of connecting to the TV main board apparatus; and a second connection section located at the other end of the connection line and capable of connecting to the TV.

In a first embodiment of the second aspect, the second electric power is converted from the first electric power by the TV and adapted for powering the TV main board apparatus.

In a second embodiment of the second aspect, a terminal configured to transmit the first electric power, a terminal configured to transmit the second electric power, and a terminal configured to transmit the multimedia signal are integrated in the first connection section and the second connection section respectively.

In a third embodiment of the second aspect, the first connection section and the second connection section respectively comprise a high definition multimedia interface (HDMI), and a part of pins of the HDMI are configured to transmit a high definition multimedia signal and another part of the pins are configured to transmit the second electric power.

In a fourth embodiment of the second aspect, which can be a further embodiment of the third embodiment, the HDMI has more than 19 pins.

In a fifth embodiment of the second aspect, the first connection section and the second connection section can respectively have a live wire terminal and a neutral wire terminal that are configured to transmit the first electric power.

According to a third aspect of the present disclosure, there is provided a TV, comprising: a transfer apparatus configured to receive a multimedia signal from a TV main board apparatus so as to allow the multimedia signal to be played, and receive first electric power from the TV main board apparatus so as to supply the first electric power to a power supply board; and the power supply board configured to convert the first electric power into second electric power, supply the second electric power to the transfer apparatus so as to output the second electric power to the TV main board apparatus via the transfer apparatus, and convert the first electric power into third electric power for powering a backlight system of the TV.

In a first embodiment of the third aspect, the power supply board is configured to convert the first electric power into fourth electric power for powering the transfer apparatus.

In a second embodiment of the third aspect, the TV can further comprise a timing controller (T-CON), wherein the transfer apparatus supplies the multimedia signal to the T-CON.

In a third embodiment of the third aspect, the transfer apparatus comprises an interface component in which a terminal configured to transmit the first electric power, a terminal configured to transmit the second electric power, and a terminal configured to transmit the multimedia signal are integrated.

In a fourth embodiment of the third aspect, the interface component comprises a high definition multimedia interface (HDMI), and a part of the pins of the HDMI are configured to transmit a high definition multimedia signal and another part of the pins are configured to transmit the second electric power.

In a fifth embodiment of the third aspect, which is a further embodiment of the fourth embodiment, the HDMI may have more than 19 pins.

In a six embodiment of the third aspect, which is a further embodiment of the third embodiment, the interface component can comprise a live wire terminal and a neutral wire terminal that are configured to transmit the first electric power.

According to a fourth aspect of the present disclosure, there is provided a TV system, comprising a TV main board apparatus, a TV, one power line, and one connection apparatus, wherein the power line is capable of connecting the TV main board apparatus to a power supply so as to transmit first electric power to the TV main board apparatus from the power supply, and the connection apparatus is configured to connect the TV main board apparatus to the TV so as to transmit a multimedia signal and the first electric power to the TV from the TV main board apparatus and transmit second electric power to the TV main board apparatus from the TV.

In a first embodiment of the fourth aspect, the TV main board apparatus can comprise: a casing having at least one opening; and a TV main board accommodated in the casing and having a first interface and a second interface that are exposed outside the casing via their respective openings, the first interface is connected to the power line, and the second interface is connected to the connection apparatus..

In a second embodiment of the fourth aspect, which is a further embodiment of the first embodiment, a terminal configured to transmit the first electric power, a terminal configured to transmit the second electric power, and a terminal configured to transmit the multimedia signal are integrated in the second interface.

In a third embodiment of the fourth aspect, which is a further embodiment of the first embodiment, the second interface comprises a high definition multimedia interface (HDMI), and a part of the pins of the HDMI are configured to transmit a high definition multimedia signal and another part of the pins are configured to transmit the second electric power.

In a fourth embodiment of the first aspect, which is a further embodiment of the third embodiment, the HDMI may have more than 19 pins.

In a fifth embodiment of the fourth aspect, which is a further embodiment of the first embodiment, the second interface may have a live wire terminal and a neutral wire terminal that are configured to transmit the first electric power.

In a sixth embodiment of the fourth aspect, the connection apparatus can comprise: a connection line configured to transmit the multimedia signal and the first electric power that are supplied by the TV main board apparatus to the TV and transmit the second electric power that is supplied by the TV to the TV main board apparatus; a first connection section located at one end of the connection line and connected to the TV main board apparatus; and a second connection section located at the other end of the connection line and connected to the TV.

In a seventh embodiment of the fourth aspect, which is a further embodiment of the sixth embodiment, a terminal configured to transmit the first electric power, a terminal configured to transmit the second electric power, and a terminal configured to transmit the multimedia signal are integrated in the first connection section and the second connection section respectively.

In an eighth embodiment of the fourth aspect, which is a further embodiment of the sixth embodiment, the first connection section and the second connection section respectively comprise a high definition multimedia interface (HDMI), and a part of the pins of the HDMI are configured to transmit a high definition multimedia signal and another part of the pins are configured to transmit the second electric power.

In a ninth embodiment of the fourth aspect, which is a further embodiment of the eighth embodiment, the HDMI may have more than 19 pins.

In a tenth embodiment of the fourth aspect, which is a further embodiment of the sixth embodiment, the first connection section and the second connection section respectively may have a live wire terminal and a neutral wire terminal that are configured to transmit the first electric power.

In an eleventh embodiment of the fourth aspect, the TV can comprise: a transfer apparatus configured to receive the multimedia signal from the TV main board apparatus so as to allow the multimedia signal to be played, and receive the first electric power from the TV main board apparatus to supply the first electric power to a power supply board; and the power supply board configured to convert the first electric power into the second electric power, supply the second electric power to the transfer apparatus so as to output the second electric power to the TV main board apparatus via the transfer apparatus for powering the TV main board apparatus, and convert the first electric power into third electric power for powering a backlight system of the TV.

In a twelfth embodiment of the fourth aspect, which is a further embodiment of the eleventh embodiment, the power supply board is configured to convert the first electric power to fourth electric power for powering the transfer apparatus.

In a thirteenth embodiment of the fourth aspect, which is a further embodiment of the eleventh embodiment, the TV can further comprise a timing controller (T-CON), wherein the transfer apparatus supplies the multimedia signal to the T-CON.

In a fourteenth embodiment of the fourth aspect, which is a further embodiment of the eleventh embodiment, the transfer apparatus comprises an interface component connected to the connection apparatus and to the TV main board apparatus via the connection apparatus, and a terminal configured to transmit the first electric power, a terminal configured to transmit the second electric power, and a terminal configured to transmit the multimedia signal are integrated in the interface component.

In a fifteenth embodiment of the fourth aspect, which is a further embodiment of the fourteenth embodiment, the interface component comprises a high definition multimedia interface (HDMI), and a part of pins of the HDMI are configured to transmit a high definition multimedia signal and another part of the pins are configured to transmit the second electric power.

In a sixteenth embodiment of the fourth aspect, which is a further embodiment of the fifteenth embodiment, the HDMI may have more than 19 pins.

In a seventeenth embodiment of the fourth aspect, which is a further embodiment of the fourteenth embodiment, the interface component may have a live wire terminal and a neutral wire terminal that are configured to transmit the first electric power.

Some embodiments may have one or more of the following advantages.

In some of the aspects of the present disclosure, the TV main board is separated as an independent apparatus from the TV, so the TV does not need to have a large number of leading-out wires, and the TV main board can be repaired and replaced with ease. Besides, in some of the aspects of the present disclosure, it is unnecessary to provide the TV and the main board with separate power supply lines. Instead, when being used, merely connecting the TV to the TV main board apparatus and connecting the TV main board apparatus to a power supply makes it possible to supply power to both the TV main board apparatus and the TV and transmit a signal therebetween. As a result, the whole system becomes less complicated, easier to use and install, and concise and attractive in appearance.

Additional features and aspects of the present disclosure will become apparent from the following description of exemplary examples with reference to the attached drawings.

### BRIEF DESCRIPTION OF THE DRAWINGS

The drawings, which are incorporated in and constitute part of the specification, together with the description, illustrate exemplary examples, features and aspects of the present disclosure and serve to explain the principles of the present disclosure.
Fig. 1a is a schematic diagram illustrating the TV main board and its connection with other related components in a TV.
Fig. 1b is a back view of a TV that is integrated with a TV main board.
Fig. 2 is a schematic structural diagram showing a TV main board apparatus according to an example of the present disclosure.
Figs. 3a-3d are schematic structural diagrams showing examples of a second interface.
Fig. 4 is a schematic structural diagram showing a connection apparatus according to an example of the present disclosure.
Fig. 5 is a schematic structural diagram showing the cross section of an example of the connection line.
Fig. 6 is a schematic structural diagram showing a TV according to an example of the present disclosure.
Fig. 7 is a schematic structural diagram showing a TV system according to an example of the present disclosure.

### DETAILED DESCRIPTION

Various exemplary examples, features and aspects of the present disclosure will be described in detail with reference to the drawings. The same reference numerals in the drawings represent parts having the same or similar functions. Although various aspects of the examples are shown in the drawings, it is unnecessary to proportionally draw the drawings unless otherwise specified.

Herein the term "exemplary" means "used as an instance or example, or explanatory". An "exemplary" example given here is not necessarily construed as being superior to or better than other examples.

Numerous details are given in the following examples for the purpose of better explaining the present disclosure. It should be understood by a person skilled in the art that the present disclosure can still be realized even without some of those details. In some of the examples, methods, means, units and circuits that are well known to a person skilled in the art are not described in detail so that the principle of the present disclosure become apparent.

### First Embodiment

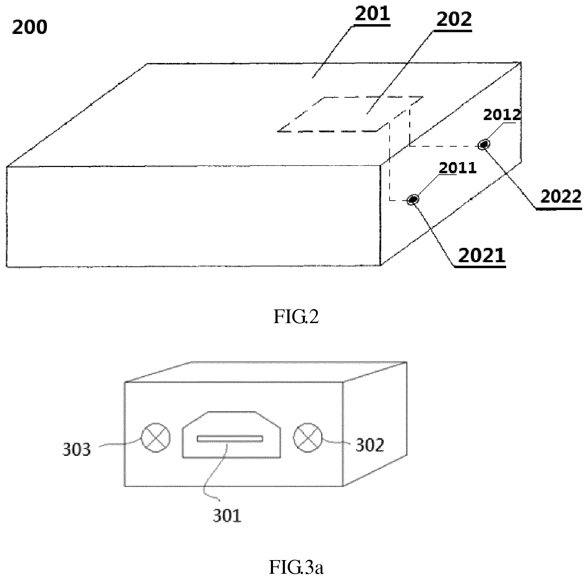

Fig. 2 is a schematic structural diagram showing a TV main board apparatus 200 according to an example of the present disclosure. As shown in Fig. 2, the TV main board apparatus 200 comprises a casing 201 having at least one opening such as openings 2011, 2012. The TV main board apparatus 200 further comprises a TV main board 202 accommodated in the casing 201 and having a first interface 2021 and a second interface 2022. The first interface 2021 and the second interface 2022 are exposed outside the casing 201 via their respective openings 2011 and 2012. The first interface 2021 is connectable to a power supply so as to receive first electric power. The second interface 2022 is connectable to a TV so as to transmit a multimedia signal and the first electric power to the TV and receive second electric power from the TV.

This example separates a TV main board as an independent apparatus from a TV, so the TV does not need to have a large number of leading-out wires, and the TV main board can be repaired and replaced with ease. In this example, it is unnecessary to provide the TV and the main board with separate power supply lines. Instead, the TV main board apparatus is capable of supplying the first electric power to the TV via the second interface so as to supply power to the TV and receiving the second electric power from the TV via the second interface so as to power itself. That way, only connecting the first interface to a power supply and connecting the second interface to the TV make it possible to supply power to both the TV main board apparatus and the TV and transmit a signal therebetween. As a result, the whole system becomes less complicated, easier to use and install, and concise and attractive in appearance.

As an example of the casing, the casing 201 may be in any desired shape such as a cuboid or a cube. The present disclosure is not intended to place any restrictions on the shape of the casing. The opening primarily serves to expose an interface (e.g., a power supply interface, an audio/video interface, a cable television interface, or a USB interface) that is within the casing outside the casing, and accommodate various components such as press keys, a remote-control signal receiver, and a display. The use, shape, number, location and the like of the opening may be decided in light of actual needs, and are not restricted by the present disclosure.

As an example, the opening 2011, which accommodates the first interface 2021, and the opening 2012, which accommodates the second interface 2022, may be located on the same side of the casing 201. However, the openings 2011 and 2012 may be located on other parts of the casing (e.g., two opposite sides of the casing). The present disclosure is not intended to place any restrictions on the location.

The first interface 2021 is connectable to a power supply so as to receive the first electric power. As an example of the first electric power, it may be AC power of 220V.

The second interface 2022 is connectable to the TV so as to transmit the multimedia signal and the first electric power to the TV and receive the second electric power from the TV. As an example of the multimedia signal, it may be a multimedia signal input externally or a multimedia signal that is converted by the TV main board from a built-in signal (e.g., an audio signal, a video signal and a text) of the TV main board apparatus. Such a multimedia signal may be, for instance, a high definition multimedia interface (HDMI) signal.

As an example, the second electric power may be obtained by converting the first electric power by the TV. For instance, it may be DC power obtained by performing an AC-DC conversion of AC power of 220V. The second electric power may serve to power the TV main board apparatus. The voltage of the second electric power may be set as the TV main board apparatus needs for power, such as 5V.

As an example, a terminal configured to transmit the first electric power, a terminal configured to transmit the second electric power, and a terminal configured to transmit the multimedia signal may be integrated in the second interface 2022. Due to such integrated configuration, only one line is needed between the TV main board apparatus and the TV, making it possible to supply power to both the TV main board apparatus and the TV and transmit the multimedia signal therebetween. As a result, the whole system looks concise and attractive and is easy to use and install.

As an example, the second interface may have an HDMI. The HDMI may have more than 19 pins, and for instance, preferably 29 or 30 pins. And a part of the pins (e.g., 13 pins, or any other number as needed) may serve to transmit an HDMI signal, and another part of the pins (e.g., 6 pins, or any other number as needed) may serve to transmit the second electric power (e.g., DC power of 5V). Some of the pins may serve to transmit a control signal or any other desired signal.

The terminals of the second interface may be arranged in the form of an array of any profile in light of needs.

The second interface 2022 may further have a live wire terminal and a neutral wire terminal that are configured to transmit the first electric power (e.g., power of the power supply of 220V).

The shape of the HDMI, live wire terminal and neutral wire terminal, the location relationship between the HDMI and the live wire and neutral wire terminals, and the profile of the second interface may be decided by a person skilled in the art in light of actual needs.

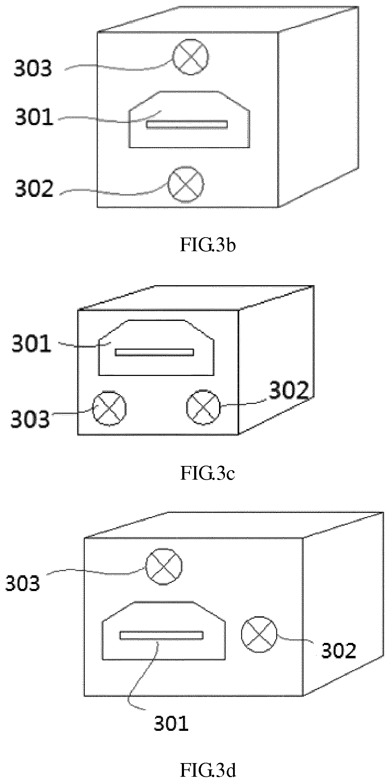

Figs. 3a-3d are schematic structural diagrams showing examples of the second interface 2022. In Fig. 3a, the live wire terminal 302 and the neutral wire terminal 303 are respectively located besides the HDMI 301. In Fig. 3b, the live wire terminal 302 and the neutral wire terminal 303 are located above and below the HDMI 301. In Fig. 3c, the live wire terminal 302 and the neutral wire terminal 303 are located below (or above) the HDMI 301. In Fig. 3d, either of the live wire terminal 302 and the neutral wire terminal 303 is located above (or below) the HDMI 301, and the other is located to the left (or right) of the HDMI 301. Although not shown in the drawings, the live wire terminal 302 and the neutral wire terminal 303 may be both located to the left or right of the HDMI 301. It should be understood by a person skilled in the art that Figs. 3a-3d just give some examples of the second interface 2022 and its specific configuration may be devised by a person skilled in the art in light of actual needs, provided that it is capable of transmitting a multimedia signal and the first electric power to the TV and receiving the second electric power from the TV.

### Second Embodiment

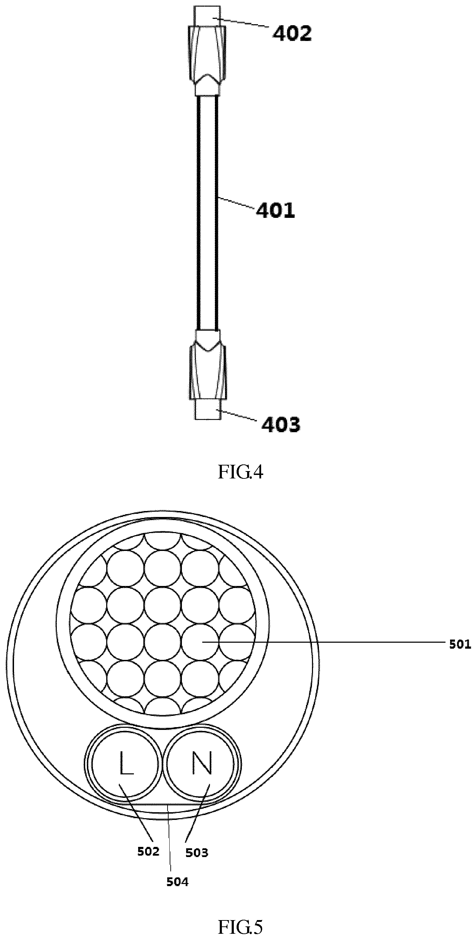

Fig. 4 is a schematic structural diagram showing a connection apparatus according to an example of the present disclosure. As shown in Fig. 4, the connection apparatus 400 comprises a connection line 401 capable of transmitting a multimedia signal and first electric power that are supplied by a TV main board apparatus to a TV and transmitting second electric power that is supplied by the TV to the TV main board apparatus. The connection apparatus 400 further comprises: a first connection section 402 located at one end of the connection line and connectable to the TV main board apparatus; and a second connection section 403 located at the other end of the connection line and connectable to the TV.

The connection apparatus exemplified as such integrates the transmission of a multimedia signal, the transmission of first electric power and the transmission of second electric power with each other. In appearance, only one connection line makes it possible to supply power to both a TV and a TV main board apparatus and transmit a multimedia signal. As a result, the whole system becomes less complicated, easier to use and install, and concise and attractive in appearance.

See First Embodiment for more details of the first electric power, second electric power and multimedia signal. Repetitive specification will not be provided here for conciseness.

As an example, the first connection section 402 may be compatible with and connectable to the second interface 2022 of the TV main board apparatus in First Embodiment.

As an example, a terminal configured to transmit the first electric power, a terminal configured to transmit the second electric power, and a terminal configured to transmit the multimedia signal may be integrated in the first connection section 402 and second connection section 403 respectively. Correspondingly, the connection line 401 may comprise a connection line configured to transmit the first electric power, a connection line configured to transmit the second electric power, and a connection line configured to transmit the multimedia signal.

Fig. 5 is a schematic structural diagram showing the cross section of an example of the connection line 401. In this example, the connection line may have: an HDMI transmission-line assembly 501 configured to transmit the multimedia signal and the second electric power; and a live wire 502 and a neutral wire 503 that are configured to transmit the first electric power. The live wire and neutral wire may be surrounded by a shielding section 504.

It should be understood by a person skilled in the art that Fig. 5 shows only one example of the connection line and its specific configuration may be devised by a person skilled in the art in light of actual needs, provided that it is capable of transmitting a multimedia signal, first electric power and second electric power.

The first connection section 402 can be compatible with and connectable to the above-mentioned second interface. The first connection section 402 may have an HDMI with, for instance, more than 19 pins, and preferably 29 or 30 pins. A part of the pins (e.g., 13 pins, or any other number as needed) may serve to transmit a high definition multimedia signal, and another part of the pins (e.g., 6 pins, or any other number as needed) may serve to transmit the second electric power (e.g., DC power of 5V). Some of the pins may serve to transmit a control signal or any other desired signal.

The terminals of the first connection section 402 may be arranged in the form of an array of any profile.

The first connection section 402 may further have a live wire terminal and a neutral wire terminal that are configured to transmit the first electric power (e.g., 220V power supply).

It should be understood by a person skilled in the art that the specific configuration of the first connection section may be devised by a person skilled in the art in light of actual needs.

For instance, the first connection section may be of configuration similar to that shown in Figs. 3a-3d, provide that it is compatible with and connectable to the corresponding interface of a TV main board apparatus.

Similarly, the second connection section 403 may be similar to the first connection section 402 in its design, or it may be devised by a person skilled in the art in light of actual needs. The second connection section 403 may be the same as or different from the first connection section 402 in configuration, provided that it is compatible with and connectable to the corresponding interface of a TV.

Each of the transmission lines in the connection line 401 may correspond to and electrically connect to each of the terminals of the first connection section 402 and the second connection section 403.

### Third Embodiment

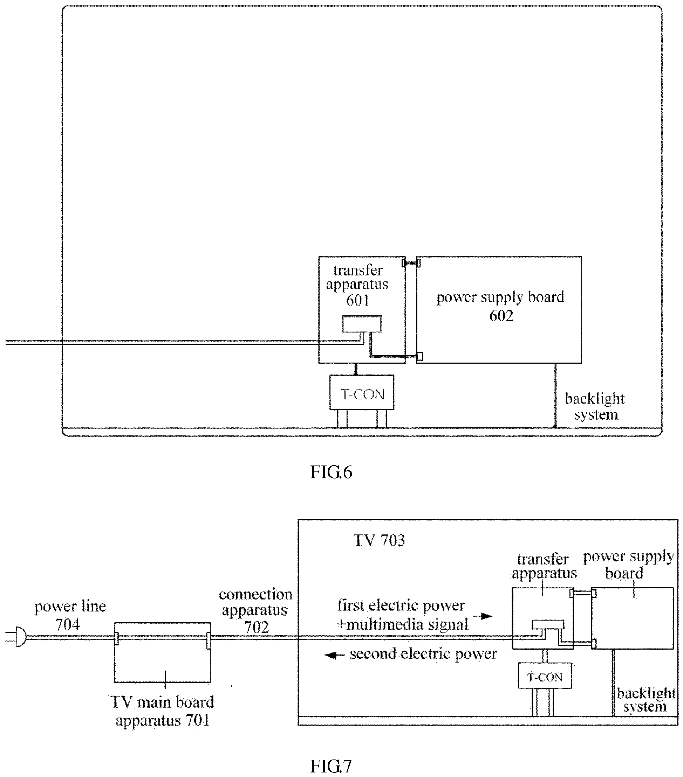

Fig. 6 is a schematic structural diagram showing a TV according to an example of the present disclosure. As shown in Fig. 6, the TV comprises a transfer apparatus 601 that receives a multimedia signal from a TV main board apparatus so as to allow the multimedia signal to be played and receives first electric power from the TV main board apparatus so as to supply the first electric power to a power supply board 602. The TV further comprises the power supply board 602 that converts the first electric power into second electric power and supplies the second electric power to the transfer apparatus 601-which supplies the second electric power to the TV main board apparatus, and converts the first electric power into third electric power for powering a backlight system of the TV.

The TV exemplified as such does not have a built-in TV main board. Instead, the TV main board apparatus is independent of the TV, so the TV does not need to have a large number of leading-out wires, and the TV main board can be repaired and replaced with ease. Besides, in this example, the transfer apparatus serves to supply power to both the TV and the TV main board apparatus and transmit a multimedia signal. That way, when the TV is to be used, it only needs to connect to the TV main board apparatus and does not need additional power lines. As a result, the whole system becomes less complicated, easier to use and install, and concise and attractive in appearance.

See First Embodiment for more details of the first electric power, second electric power and multimedia signal. Repetitive specification will not be provided here for conciseness.

As an example, the power supply board 602 may convert the first electric power into fourth electric power for powering the transfer apparatus. For instance, the fourth electric power may be obtained by performing an AC-DC conversion of AC power of 220V (the first electric power). The voltage of the fourth electric power may be set as the transfer apparatus needs for power, such as 12V.

As an example, the power supply board 602 may include an AC-DC converter that converts the first electric power into the second or fourth electric power.

As an example, the backlight system of the TV may be a light bar. In this case, the third electric power may be a driving voltage for the light bar. The voltage of the third electric power may be decided by a person skilled in the art in light of actual application scenarios.

As an example, the TV may further comprise a timing controller (T-CON). The transfer apparatus may provide the T-CON with a multimedia signal (e.g., a video signal) so as to drive a display to display the multimedia signal. The transfer apparatus may comprise, for instance, a V-by-One (VBO, a signaling standard) interface, or a 51 Pin low voltage differential signaling (LVDS) interface, so as to supply a multimedia signal to the T-CON.

As an example, the transfer apparatus 601 may further comprise an interface component. The interface component can be compatible with and connectable to the second connection section 403 of the connection apparatus in Second Embodiment. A terminal configured to transmit the first electric power, a terminal configured to transmit the second electric power, and a terminal configured to transmit the multimedia signal may be integrated in the interface component.

As an example, the interface component can be compatible with and connectable to the second connection section 403 of the above-mentioned connection apparatus. The end surface of the interface component may be of configuration similar to that shown in Figs. 3a-3d. The interface component may have an HDMI with more than 19 pins, and, for instance, preferably 29 or 30 pins. A part of the pins (e.g., 13 pins, or any other number as needed) may serve to transmit an HDMI signal, and another part of the pins (e.g., 6 pins, or any other number as needed) may serve to transmit the second electric power (e.g., DC power of 5V). Some of the pins may serve to transmit a control signal or any other desired signal.

The terminals of the interface component may be arranged in the form of an array of any profile.

The interface component may have a live wire terminal and a neutral wire terminal that are configured to transmit the first electric power (e.g., 220V power supply).

It should be understood by a person skilled in the art that Figs. 3a-3d illustrate only examples of the configuration of the interface component and its configuration may be devised in light of actual needs, provided that it is integrated with a terminal configured to transmit the first electric power, a terminal configured to transmit the second electric power, and a terminal configured to transmit the multimedia signal.

### Fourth Embodiment

Fig. 7 is a schematic structural diagram showing a TV system according to an example of the present disclosure. As shown in Fig. 7, the TV system comprises: a TV main board apparatus 701, a TV 703, one power line 704, and one connection apparatus 702. The power line 704 is capable of connecting the TV main board apparatus 701 to a power supply so as to transmit first electric power to the TV main board apparatus 701 from the power supply. The connection apparatus 702 is capable of connecting the TV main board apparatus 701 to the TV 703 so as to transmit a multimedia signal and the first electric power to the TV 703 from the TV main board apparatus 701 and transmit second electric power to the TV main board apparatus 701 from the TV 703.

This example separates a TV main board as an independent apparatus from a TV, so the TV does not need to have a large number of leading-out wires, and the TV main board can be repaired and replaced with ease. In this example, it is unnecessary to provide the TV and the main board with separate power supply lines. Instead, when the TV is to be used, connecting the TV main board apparatus to a power supply with one power line and connecting the TV to the TV main board apparatus with one connection apparatus make it possible to supply power to both the TV main board apparatus and the TV and transmit a signal therebetween. As a result, the whole system becomes less complicated, easier to use and install, and concise and attractive in appearance.

As an example, the TV main board apparatus 701 may be of configuration similar to that of the TV main board apparatus in First Embodiment.

For instance, the TV main board apparatus may comprise a casing having at least one opening; and a TV main board accommodated in the casing and having a first interface and a second interface exposed outside the casing via their respective openings. The first interface is connectable to the power line, and the second interface is connectable to the connection apparatus.

A terminal configured to transmit the first electric power, a terminal configured to transmit the second electric power, and a terminal configured to transmit the multimedia signal may be integrated in the second interface. For instance, the second interface may have an HDMI. A part of the pins of the HDMI can be configured to transmit a high definition multimedia signal and another part of the pins can be configured to transmit the second electric power. The HDMI may have more than 19 pins. The second interface may have a live wire terminal and a neutral wire terminal that are configured to transmit the first electric power.

As an example of the connection apparatus 702, it may be of configuration similar to that of the connection apparatus in Second Embodiment.

For instance, the connection apparatus may comprise: a connection line capable of transmitting a multimedia signal and first electric power that are supplied by a TV main board apparatus to a TV and transmitting second electric power that is supplied by the TV to the TV main board apparatus; a first connection section located at one end of the connection line and connectable to the TV main board apparatus; and a second connection section located at the other end of the connection line and connectable to the TV.

A terminal configured to transmit the first electric power, a terminal configured to transmit the second electric power, and a terminal configured to transmit the multimedia signal may be integrated in the first connection section and the second connection section respectively. For instance, the first connection section and the second connection section may respectively comprise an HDMI. A part of the pins of the HDMI can be configured to transmit a high definition multimedia signal and another part of the pins can be configured to transmit the second electric power. The HDMI may have more than 19 pins. The first connection section and the second connection section may respectively have a live wire terminal and a neutral wire terminal that are configured to transmit the first electric power.

As an example of the TV 703, it may be of configuration similar to that of the TV in Third Embodiment.

For instance, the TV 703 may comprise: a transfer apparatus that receives a multimedia signal from the TV main board apparatus so as to allow the multimedia signal to be played and receives first electric power from the TV main board apparatus so as to supply the first electric power to a power supply board; and the power supply board that converts the first electric power into second electric power, supplies the second electric power to the transfer apparatus so as to output the second electric power and thereby supply power to the TV main board apparatus via the transfer apparatus, and converts the first electric power into third electric power for powering a backlight system of the TV. The power supply board may convert the first electric power to fourth electric power for powering the transfer apparatus.

The TV may further comprise a timing controller (T-CON), wherein the transfer apparatus supplies the multimedia signal to the T-CON.

The transfer apparatus may comprise an interface component connectable to a connection apparatus and to a TV main board apparatus via the connection apparatus, wherein a terminal configured to transmit the first electric power, a terminal configured to transmit the second electric power, and a terminal configured to transmit the multimedia signal may be integrated in the interface component. For instance, the interface component may comprise a high definition multimedia interface (HDMI), wherein a part of the pins of the HDMI can be configured to transmit a high definition multimedia signal and another part of the pins can be configured to transmit the second electric power. The HDMI may have more than 19 pins. The interface component may have a live wire terminal and a neutral wire terminal that are configured to transmit the first electric power.

As an example, the power line 704 may be a power line selectable by a person skilled in the art which is capable of transmitting the first electric power (e.g., 220V AC power).

### Application Examples

There is provided here a work process of an example of the present disclosure in an exemplary application scenario so that the present disclosure can be understood with ease. It should be understood by a person skilled in the art that the process is provided to help comprehension of the present disclosure and is not meant to limit the present disclosure in any way.

Take the TV system shown in Fig. 7 as an example. The first interface of the TV main board apparatus 701 is connectable to a 220V AC power supply via the power line 704. 220V power (the first electric power) provided by the power supply can be supplied to the TV 703 by the TV main board apparatus 701 via the connection apparatus 702. The transfer apparatus in the TV 703 receives the 220V power and supplies it to the power supply board. The power supply board converts a part of the power into a driving voltage for the backlight bar, another part into 12V DC power as the fourth electric power for powering the transfer apparatus, and still another part into 5V DC power as the second electric power-which the transfer apparatus supplies to the TV main board apparatus 701 for powering the TV main board apparatus 701. The powered TV main board apparatus 701 supplies the converted HDMI signal to the TV 703 via the connection apparatus 702. The powered transfer apparatus can supply the HDMI signal to other components such as the T-CON so as to allow the multimedia signal to be played.

The above descriptions are just embodiments of the present disclosure. The protection scope of the present disclosure is not limited thereto and covers various modifications or replacements which a person skilled in the art can easily think of and that fall within the technical range of the present disclosure. The protection scope of the present disclosure is determined by the appended claims.

## Claims

1. A TV main board apparatus (200), comprising:
a casing (201) having at least one opening; and
a TV main board (202) accommodated in the casing (201) and having a second interface (2022) that is exposed outside the casing (201) via an opening (2012),
wherein, the second interface (2022) is configured to connect to a TV so as to transmit a multimedia signal to the TV and receive second electric power from the TV,
the TV main board apparatus (200) being **characterized in that**:
the TV main board apparatus (200) is separated from the TV as an independent apparatus,
the TV main board (202) further has a first interface (2021) that is exposed outside the casing (201) via an opening (2011) and configured to connect to a power supply so as to receive first electric power, and
the second interface is further configured to transmit the first electric power to the TV.

2. The TV main board apparatus (200) according to claim 1, wherein the second electric power is converted from the first electric power by the TV and adapted for powering the TV main board apparatus (200).

3. The TV main board apparatus (200) according to claim 1, wherein a terminal configured to transmit the first electric power, a terminal configured to transmit the second electric power, and a terminal configured to transmit the multimedia signal are integrated in the second interface (2022).

4. The TV main board apparatus (200) according to claim 1, wherein the second interface (2022) comprises a high definition multimedia interface (HDMI), and a part of pins of the HDMI are configured to transmit a high definition multimedia signal and another part of the pins are configured to transmit the second electric power, preferably the HDMI has more than 19 pins, and/or
the second interface (2022) has a live wire terminal and a neutral wire terminal that are configured to transmit the first electric power.

5. A TV, comprising:
a transfer apparatus (601) configured to receive a multimedia signal from a TV main board apparatus so as to allow the multimedia signal to be played,
the TV being **characterized in that**:
the TV main board apparatus (200) is separated from the TV as an independent apparatus,
the transfer apparatus is further configured to receive first electric power from the TV main board apparatus so as to supply the first electric power to a power supply board (602),
the TV further comprises the power supply board (602) configured to convert the first electric power into second electric power, supply the second electric power to the transfer apparatus (601) so as to output the second electric power to the TV main board apparatus via the transfer apparatus (601), and convert the first electric power into third electric power for powering a backlight system of the TV.

6. The TV according to claim 5, wherein the power supply board (602) is configured to convert the first electric power into fourth electric power for powering the transfer apparatus (601).

7. The TV according to claim 5, further comprising a timing controller T-CON, wherein the transfer apparatus is configured to supply the multimedia signal to the T-CON.

8. The TV according to claim 5, wherein the transfer apparatus (601) comprises an interface component in which a terminal configured to transmit the first electric power, a terminal configured to transmit the second electric power, and a terminal configured to transmit the multimedia signal are integrated.

9. The TV according to claim 8, wherein the interface component comprises a high definition multimedia interface (HDMI), and a part of the pins of the HDMI are configured to transmit a high definition multimedia signal and another part of the pins are configured to transmit the second electric power, preferably the HDMI has more than 19 pins, and/or
the interface component comprises a live wire terminal and a neutral wire terminal that are configured to transmit the first electric power.

10. A TV system, comprising a TV main board apparatus and a TV,
the TV system being **characterized in that**:
the TV main board apparatus is the TV main board apparatus (701) according to any one of claims 1 to 4, and the TV is the TV (703) according to any one of claims 5 to 9,
the TV system further comprises one power line (704) and one connection apparatus (702),
wherein the power line (704) is configured to connect the first interface in the TV main board apparatus (701) to the power supply so as to transmit the first electric power to the TV main board apparatus(701) from the power supply,
the connection apparatus (702) is configured to connect the TV main board apparatus (701) to the TV (703) so as to transmit the multimedia signal and the first electric power to the TV (703) from the TV main board apparatus(702) and transmit the second electric power to the TV main board apparatus (701) from the TV (703), and
the connection apparatus (702) comprises:
a connection line configured to transmit the multimedia signal and the first electric power from the TV main board apparatus to the TV and transmit the second electric power from the TV to the TV main board apparatus;
a first connection section located at one end of the connection line and configured to connect to the second interface in the TV main board apparatus; and
a second connection section located at the other end of the connection line and configured to connect to the transfer apparatus in the TV.

## Patentansprüche

1. TV-Hauptplatinenvorrichtung (200), umfassend:
ein Gehäuse (201) mit mindestens einer Öffnung; und
eine TV-Hauptplatine (202), die in dem Gehäuse (201) untergebracht ist und eine zweite Schnittstelle (2022) aufweist, die über eine Öffnung (2012) außerhalb des Gehäuses (201) freiliegt,
wobei die zweite Schnittstelle (2022) dafür eingerichtet ist, sich mit einem Fernseher zu verbinden, um ein Multimediasignal an den Fernseher zu übertragen und eine zweite elektrische Leistung von dem Fernseher zu empfangen,
die TV-Hauptplatinenvorrichtung (200) **dadurch gekennzeichnet ist, dass**:
die TV-Hauptplatinenvorrichtung (200) als eine eigenständige Vorrichtung von dem Fernseher getrennt ist,
wobei die TV-Hauptplatine (202) ferner eine erste Schnittstelle (2021) aufweist, die über eine Öffnung (2011) außerhalb des Gehäuses (201) freiliegt und dafür eingerichtet ist, sich mit einer Stromversorgung zu verbinden, um eine erste elektrische Leistung zu empfangen, und
die zweite Schnittstelle ferner dafür eingerichtet ist, die erste elektrische Leistung an den Fernseher zu übertragen.

2. TV-Hauptplatinenvorrichtung (200) nach Anspruch 1, wobei die zweite elektrische Leistung von der ersten elektrischen Leistung durch den Fernseher umgewandelt und zum Betreiben der TV-Hauptplatinenvorrichtung (200) angepasst wird.

3. TV-Hauptplatinenvorrichtung (200) nach Anspruch 1, wobei ein Anschluss zum Übertragen der ersten elektrischen Leistung, ein Anschluss zum Übertragen der zweiten elektrischen Leistung und ein Anschluss zum Übertragen des Multimedia-Signals in die zweite Schnittstelle (2022) integriert sind.

4. TV-Hauptplatinenvorrichtung (200) nach Anspruch 1, wobei die zweite Schnittstelle (2022) eine hochauflösende Multimedia-Schnittstelle (HDMI) umfasst, und ein Teil von Pins des HDMI dafür eingerichtet ist, ein hochauflösendes Multimedia-Signal zu übertragen, und ein anderer Teil der Pins dafür eingerichtet ist, die zweite elektrische Leistung zu übertragen, wobei vorzugsweise die HDMI mehr als 19 Pins aufweist, und/oder
die zweite Schnittstelle (2022) einen Phasenleiteranschluss und einen Neutralleiteranschluss aufweist, die dafür eingerichtet sind, die erste elektrische Leistung zu übertragen.

5. Fernseher, umfassend:
eine Übertragungsvorrichtung (601), die dafür eingerichtet ist, ein Multimediasignal von einer TV-Hauptplatinenvorrichtung zu empfangen, so dass das Multimediasignal abgespielt werden kann,
wobei der Fernseher **dadurch gekennzeichnet ist, dass**:
die TV-Hauptplatinenvorrichtung (200) als eine eigenständige Vorrichtung von dem Fernseher getrennt ist,
die Übertragungsvorrichtung ferner dafür eingerichtet ist, eine erste elektrische Leistung von der TV-Hauptplatinenvorrichtung zu empfangen, um die erste elektrische Leistung der Stromversorgungsplatine (602) zuzuführen,
wobei der Fernseher ferner die Stromversorgungsplatine (602) umfasst, die dafür eingerichtet ist, die erste elektrische Leistung in eine zweite elektrische Leistung umzuwandeln, die zweite elektrische Leistung der Übertragungsvorrichtung (601) zuzuführen um die zweite elektrische Leistung über die Übertragungsvorrichtung (601) an die TV-Hauptplatinenvorrichtung abzugeben, und die erste elektrische Leistung in eine dritte elektrische Leistung umzuwandeln, um ein Backlight-System des Fernsehers zu betreiben.

6. Fernseher nach Anspruch 5, wobei die Stromversorgungsplatine (602) dafür eingerichtet ist, die erste elektrische Leistung in eine vierte elektrische Leistung zum Betreiben der Übertragungsvorrichtung (601) umzuwandeln.

7. Fernseher nach Anspruch 5, ferner umfassend eine Zeitsteuereinrichtung T-CON, wobei die Übertragungsvorrichtung dafür eingerichtet ist, das Multimedia-Signal der T-CON zuzuführen.

8. Fernseher nach Anspruch 5, wobei die Übertragungsvorrichtung (601) ferner eine Schnittstellenkomponente umfasst, in die ein Anschluss zum Übertragen der ersten elektrischen Leistung, ein Anschluss zum Übertragen der zweiten elektrischen Leistung und ein Anschluss zum Übertragen des Multimedia-Signals integriert sind.

9. Fernseher nach Anspruch 8, wobei die Schnittstellekomponente eine hochauflösende Multimedia-Schnittstelle (HDMI) umfasst, und ein Teil der Pins der HDMI dafür eingerichtet ist, ein hochauflösendes Multimedia-Signal zu übertragen, und ein anderer Teil der Pins dafür eingerichtet ist, die zweite elektrische Leistung zu übertragen, wobei vorzugsweise die HDMI mehr als 19 Pins aufweist, und/oder
die Schnittstellenkomponente einen Phasenleiteranschluss und einen Neutralleiteranschluss umfasst, die dafür eingerichtet sind, die erste elektrische Leistung zu übertragen.

10. Fernsehsystem, umfassend eine TV-Hauptplatinenvorrichtung und einen Fernseher,
wobei das Fernsehsystem **dadurch gekennzeichnet ist, dass**
die TV-Hauptplatinenvorrichtung die TV-Hauptplatinenvorrichtung (701) nach einem der Ansprüche 1 bis 4 ist, und der Fernseher der Fernseher (703) nach einem der Ansprüche 5 bis 9 ist,
das Fernsehsystem ferner eine Stromleitung (704) und eine Verbindungsvorrichtung (702) umfasst,
wobei die Stromleitung (704) dafür eingerichtet ist, die erste Schnittstelle in der TV-Hauptplatinenvorrichtung (701) mit der Stromversorgung zu verbinden, um die erste elektrische Leistung an die TV-Hauptplatinenvorrichtung (701) von der Stromversorgung zu übertragen, wobei die Verbindungsvorrichtung (702) dafür eingerichtet ist, die TV-Hauptplatinenvorrichtung (701) mit dem Fernseher (703) zu verbinden, um das Multimedia-Signal und die erste elektrische Leistung an den Fernseher (703) von der TV-Hauptplatinenvorrichtung (702) zu übertragen und die zweite elektrische Leistung an die TV-Hauptplatinenvorrichtung (701) von dem Fernseher (703) zu übertragen, und
die Verbindungsvorrichtung (702) umfasst:
eine Verbindungsleitung, die dafür eingerichtet ist, das Multimediasignal und die erste elektrische Leistung von der TV-Hauptplatinenvorrichtung an den Fernseher zu übertragen und die zweite elektrische Leistung von dem Fernseher an die TV-Hauptplatinenvorrichtung zu übertragen;
einen ersten Verbindungsabschnitt, der sich an einem Ende der Verbindungsleitung befindet und dafür eingerichtet ist, sich mit der zweiten Schnittstelle in der TV-Hauptplatinenvorrichtung zu verbinden; und
einen zweiten Verbindungsabschnitt, der sich an dem anderen Ende der Verbindungsleitung befindet und dafür eingerichtet ist, sich mit der Übertragungsvorrichtung in dem Fernseher zu verbinden.

## Revendications

1. Dispositif de carte mère de téléviseur (200), comprenant :
un boîtier (201) ayant au moins une ouverture ; et
une carte mère de téléviseur (202) logée dans le boîtier (201) et ayant une seconde interface (2022) qui est exposée à l'extérieur du boîtier (201) via une ouverture (2012),
dans lequel, la seconde interface (2022) est configurée pour se connecter à un téléviseur de sorte à transmettre un signal multimédia au téléviseur et recevoir une deuxième alimentation électrique du téléviseur,
le dispositif de carte mère de téléviseur (200) étant **caractérisé en ce que** :
le dispositif de carte mère de téléviseur (200) est séparé du téléviseur sous forme d'un dispositif indépendant,
la carte mère du téléviseur (202) a en outre une première interface (2021) qui est exposée à l'extérieur du boîtier (201) via une ouverture (2011) et configurée pour se connecter à une source d'alimentation de sorte à recevoir une première alimentation électrique, et
la seconde interface est en outre configurée pour transmettre la première alimentation électrique au téléviseur.

2. Dispositif de carte mère de téléviseur (200) selon la revendication 1, dans lequel la deuxième alimentation électrique est convertie en la première alimentation électrique par le téléviseur et adaptée pour alimenter le dispositif de carte mère de téléviseur (200).

3. Dispositif de carte mère de téléviseur (200) selon la revendication 1, dans lequel une borne configurée pour transmettre la première alimentation électrique, une borne configurée pour transmettre la deuxième alimentation électrique, et une borne configurée pour transmettre le signal multimédia sont intégrées dans la seconde interface (2022).

4. Dispositif de carte mère de téléviseur (200) selon la revendication 1, dans lequel la seconde interface (2022) comprend une interface multimédia haute définition (HDMI), et une partie des broches de l'HDMI sont configurées pour transmettre un signal multimédia haute définition et une autre partie des broches sont configurées pour transmettre la deuxième alimentation électrique, de préférence, l'HDMI a plus de 19 broches, et/ou
la seconde interface (2022) possède une borne de fil sous tension et une borne de fil neutre qui sont configurées pour transmettre la première alimentation électrique.

5. Téléviseur, comprenant :
un dispositif de transfert (601) configuré pour recevoir un signal multimédia d'un dispositif de carte mère de téléviseur de sorte à permettre au signal multimédia d'être lu,
le téléviseur étant **caractérisée en ce que** :
le dispositif de carte mère de téléviseur (200) est séparé du téléviseur sous forme d'un dispositif indépendant,
le dispositif de transfert est en outre configuré pour recevoir une première alimentation électrique du dispositif de carte mère de téléviseur de sorte à fournir la première alimentation électrique à une carte d'alimentation (602),
le téléviseur comprend en outre la carte d'alimentation (602) configurée pour convertir la première alimentation électrique en la deuxième alimentation électrique, fournir la deuxième alimentation électrique au dispositif de transfert (601) de sorte à produire en sortie la deuxième alimentation électrique vers le dispositif de carte mère de téléviseur via le dispositif de transfert (601), et convertir la première alimentation électrique en la troisième alimentation électrique pour alimenter un système de rétroéclairage du téléviseur.

6. Téléviseur selon la revendication 5, dans lequel la carte d'alimentation (602) est configurée pour convertir la première alimentation électrique en la quatrième alimentation électrique pour alimenter le dispositif de transfert (601).

7. Téléviseur selon la revendication 5, comprenant en outre un contrôleur de synchronisation T-CON, dans lequel le dispositif de transfert est configuré pour fournir le signal multimédia au T-CON.

8. Téléviseur selon la revendication 5, dans lequel le dispositif de transfert (601) comprend un composant d'interface dans lequel sont intégrés une borne configurée pour transmettre la première alimentation électrique, une borne configurée pour transmettre la deuxième alimentation électrique et une borne configurée pour transmettre le signal multimédia.

9. Téléviseur selon la revendication 8, dans lequel le composant d'interface comprend une interface multimédia haute définition (HDMI), et une partie des broches de l'HDMI sont configurées pour transmettre un signal multimédia haute définition et une autre partie des broches sont configurées pour transmettre la deuxième alimentation électrique, de préférence, l'HDMI a plus de 19 broches, et/ou le composant d'interface comprend une borne de fil sous tension et une borne de fil neutre qui sont configurées pour transmettre la première alimentation électrique.

10. Système de téléviseur, comprenant un dispositif de carte mère de téléviseur et un téléviseur,
le système de téléviseur étant **caractérisé en ce que** :
le dispositif de carte mère de téléviseur est le dispositif de carte mère de téléviseur (701) selon l'une quelconque des revendications 1 à 4, et le téléviseur est le téléviseur (703) selon l'une quelconque des revendications 5 à 9,
le système de téléviseur comprend en outre une ligne d'alimentation (704) et un dispositif de connexion (702),
dans lequel la ligne d'alimentation (704) est configurée pour connecter la première interface dans le dispositif de carte mère de téléviseur (701) à la source d'alimentation de sorte à transmettre la première alimentation électrique au dispositif de carte mère de téléviseur (701) à partir de la source d'alimentation,
le dispositif de connexion (702) est configuré pour connecter le dispositif de carte mère de téléviseur (701) au téléviseur (703) de sorte à transmettre le signal multimédia et la première alimentation électrique au téléviseur (703) à partir du dispositif de carte mère de téléviseur (702) et à transmettre la deuxième alimentation électrique au dispositif de carte mère de téléviseur (701) à partir du téléviseur (703), et
le dispositif de connexion (702) comprend :
une ligne de connexion configurée pour transmettre le signal multimédia et la première alimentation électrique du dispositif de carte mère de téléviseur au téléviseur et pour transmettre la deuxième alimentation électrique du téléviseur au dispositif de carte mère de téléviseur ;
une première section de connexion située au niveau d'une extrémité de la ligne de connexion et configurée pour se connecter à la seconde interface dans le dispositif de carte mère de téléviseur ; et
une seconde section de connexion située au niveau de l'autre extrémité de la ligne de connexion et configurée pour se connecter au dispositif de transfert dans le téléviseur.
